# EUROPEAN PATENT APPLICATION

(11) **EP 4 793 488 A1**
(43) Date of publication of application: **19.08.2026**
(21) Application number: 25382121.9
(22) Date of filing: 12.02.2025
(51) Int. Cl.: F03D 1/06

(54) **WIND TURBINE ROTOR BLADE**

(71) Applicant: Nordex Energy Spain, S.A.U., 31395 Barasoain (Navarra) (ES)
(72) Inventor: ALCÁNTARA PLÁ, Javier, 31395 Barásoain (ES)
(74) Representative: Völkl Siebenson Patentanwälte - Partnerschaft mbB

(57) **Abstract**

The invention concerns a wind turbine rotor blade (110) comprising a half shell (134) with a spar cap (138) and a first shear web (140), wherein
- the first shear web (140) is connected to the spar cap (138), which extends in a spanwise direction (120) of the wind turbine rotor blade (110) and has a center line (121),
- the first shear web (140) has a first portion (140a) starting in a rotor blade root portion (114), and a subsequent second portion (140b),
- the first portion (140a) is orientated at an angle (α) to the center line (121) such that - starting from the rotor blade root end (126) - a distance (154) of the first shear web (140) to the center line (121) of the spar cap (138) decreases along the first portion (140a).

## Description

The present disclosure relates to the field of manufacturing wind turbine rotor blades.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step, half shells are produced from many layers of a fiber composite material, into which support structures such as spar caps are integrated. A resin infusion process takes place and the half shells cure in their half-shell molds. In a second step, the manufactured half-shells are placed on top of each other and bonded together for producing a wind turbine rotor blade. The half-shells may be interconnected inside the rotor blade by one or more (shear) webs or spars running in the longitudinal direction of the rotor blade, which absorb forces between the half-shells, especially during operation, and thus stabilize the aerodynamic shape of the rotor blade during operation. The half-shells and thus the finally produced wind turbine rotor blade may be segmented for manufacturing a so-called split or segmented wind turbine rotor blade. Alternatively, the rotor blades can be manufactured in a so-called integral manufacturing process.

One object underlying the invention is to provide a wind turbine rotor blade which provides a particularly high stiffness and enables particularly efficient manufacturing and finishing processes.

This object is achieved, inter alia, by the subject-matter of the independent claim. Advantageous embodiments and further developments are given in the dependent claims and are also apparent from the description and the figures.

A wind turbine rotor blade is disclosed, which comprises a half shell with a spar cap and a first shear web. The first shear web is connected to the spar cap. The spar cap extends in a spanwise direction of the wind turbine rotor blade and has a center line (also named central axis). The first shear web has a first portion starting in a rotor blade root portion, and a subsequent second portion. The first portion is orientated at an angle α to the center line such that - starting from a rotor blade root end - a distance of the first shear web to the center line of the spar cap decreases along the first portion.

Typically, as mentioned above, the wind turbine rotor blade comprises two half shells, which are bonded together at bonding flanges at the leading edge and the trailing edge along the spanwise direction to form an aerodynamic shell of the wind turbine rotor blade. Each half shell comprises a spar cap, wherein the spar caps are arranged opposite to each other and running in the spanwise direction. The shear web connects both spar caps. In the following, it is only referred to one half shell and one spar cap for sake of clarity.

The disclosed wind turbine rotor blade is characterized by a shear web, which has two portions which are orientated at an angle to each other. The shear web comprises a first portion, which runs at an angle to the center line. Thus, starting from the rotor blade root end, the distance between the center line and the first portion decreases. The second portion, for example, does run essentially parallel to the center line of the spar cap. Essentially means that slight deviations are possible, e.g. due to manufacturing tolerances. For example, the second portion may be oriented at an angle of less than 0.5° with respect to the center line.

Due to the specially arranged first portion, the described wind turbine rotor blade has a shear web, which not only contributes to a very stiff structure of the rotor blade but also enables an easy manufacturing and finishing process. Due to the angular arrangement of the first portion, starting from the rotor blade root end, a high degree of flexibility is achieved regarding the space within the wind turbine rotor blade, in particular if the shear web is combined with another shear web. For example, this allows a worker to better achieve certain portions of the shear web, e.g. for finishing or repair processes. For example, the application of overlaminates onto the shear web is considerably simplified on the first few meters of the wind turbine rotor blade, seen from the rotor blade root end. As another example, a removal of excess material like adhesive is facilitated, wherein particularly there is no need for special tools.

In contrast to a completely straight shear web - the shear web according to the invention makes it possible to design the space inside the rotor blade in the root portion by means of the angled first section in such a way that a worker can perform repairing, cleaning or finishing tasks in particular after the two half shells are closed and bonded together to form the entire rotor blade.

A spar cap can also be named as main laminate or belt. For example, the spar cap is formed by a plurality of fiber layers or by stacks of pultruded planks. The spar cap can be manufactured integral with the half shell of the rotor blade. Alternatively, the spar cap can be a prefabricated part, which can be included in the layup of fiber material and core material.

The shear web is connected to the spar cap along its entire length. In other words, the shear web runs along the spar cap over the entire length of the spar cap. This applies equally to the opposite spar cap of the second half-shell such that the shear web is only connected to spar caps and is not connected to a half shell outside of a spar cap.

The distance of the shear web to the center line decreases linearly or, in other words, strictly monotonically. The distance is measured along a chordwise direction transverse to the center line or the span wise direction.

The rotor blade root portion is the first section of the wind turbine rotor blade and arranged opposite to a tip of the wind turbine rotor blade. The rotor blade root portion is the part of the wind turbine rotor blade, which is connected to the rotor hub. The rotor blade root portion comprises the rotor blade root end.

The first portion has an axial end which defines the axial end of the entire first shear web. The axial end of the entire first shear web faces the rotor blade root end. In other words, the first part of the shear web - viewed from the rotor blade root end - is the first portion, which is followed by the second portion.

Starting in the rotor blade root portion means that the first portion of the first shear web may begin at the rotor blade root end or at a distance from the rotor blade root end, e.g. 3 m from the rotor blade root end.

The first portion and the second portion of the shear web can also be seen as respective two different planes, according to which the shear web extends along the spanwise direction.

According to an embodiment, the first shear web has a kink at a transition point from the first portion to the second portion. This emphasizes that the two portions of the shear web are orientated at an angle to each other. The two portions can be manufactured as two straight single parts to simplify the manufacturing process. This contributes to the above functions and advantages.

According to an embodiment, the angle α, between the first portion and the center line is less than 2 degree. This ensures that a transition of the first portion to the second portion is smooth. This contributes to avoid local stress concentrations at the kink, drapability issues of the fiber layers and the core material forming the shear web as well as high discontinuities in the wind turbine rotor blade's properties like jumps in the torsional stiffness distribution and shear center position that would lead to negative effects in the structural performance of the wind turbine rotor blade.

According to an embodiment, the transition point is located in a distance from 15% to 50% of the rotor blade total length starting from the rotor blade root end, preferably between 20% to 40% or between 30% to 38%, at 33% or at 35% of the rotor blade total length. In other words, the relation of the length of the first portion to the length of the second portion is between 1:3 to 1:1, preferably about 1:2. This contributes to the above functions and advantages regarding the smooth transition.

According to an embodiment, the distance to the center line of the second portion remains essentially constant along the second portion, i.e. along the spanwise direction. Thus, the shear web's second portion resembles a portion of a conventional shear web in an outboard region towards the rotor blade tip.

According to an embodiment, the wind turbine rotor blade comprises a second shear web. The second shear web is connected to the spar cap. The second shear web is arranged at a distance to the first shear web. Starting from, i.e. viewed from, the rotor blade root end, the distance between the two shear webs decreases along the first portion of the first shear web.

With regard to the second shear web, the above features and embodiments with regard to the first shear web analogously apply. The second shear web connects also to the spar cap of the second half shell. Like the first shear web, the second shear web connects to the spar caps of both half shells along its entire length. Preferably, the second shear web has the same length as the first shear web, besides any deviations resulting from manufacturing tolerances. The same length means, that both shear webs have the same start point and end point with respect to the longitudinal direction of the rotor blade.

By having two shear webs, a centered torsional box like the wings of an aircraft can be provided. The torsional box in this case is formed by two shear webs that run along the spanwise direction, and two spar caps, one per half shell as described above. In this case, the advantages and functions described above are particularly beneficial. The angled first portion of the first shear web increases the space between the two shear webs, while both shear webs are not connected to the half shell(s) outside the spar cap(s). This allows a worker to get in between the shear webs within the rotor blade more easily for repairing, cleaning or finishing tasks.

Again, the distance is measured along a chordwise direction transverse to the center line or the spanwise direction.

According to an embodiment, the second shear web has a first portion starting in a rotor blade root portion, and a subsequent second portion. The first portion is orientated at an angle β, to the center line such that - starting from (e.g. viewed from) the rotor blade root end - a distance of the second shear web to the center line of the spar cap decreases along the first portion. The first shear web and the second shear web converge toward each other along their first portions.

In this embodiment, the two shear webs preferably have opposite first and second portions. Preferably, the shear webs are arranged mirror-symmetrically, besides from any manufacturing tolerances. Both shear webs are arranged at a distance to each other along their entire lengths. This contributes to a very large space between the two shear webs within the wind turbine rotor blade in the rotor blade root portion and thus to the above-mentioned advantages and functions.

According to an embodiment, the second shear web has a kink at a transition point from the first portion to the second portion (of the second shear web). It is referred to the above description with regard to the kink of the first shear web, which analogously applies.

According to an embodiment, the kink of the first shear web is at the same location in a spanwise direction of the rotor blade as the kink of the second shear web. This contributes to an efficient arrangement of the shear webs and thus a smooth and homogenous distribution of loads during operation of the wind turbine rotor blade.

According to an embodiment, the angle β, between the first portion of the second shear web and the center line is less than 2 degree. Similar to the angle α above, the angle β between the second portion and the center line is less than 2 degree.

According to an embodiment, the angle α and the angle β have the same value. This contributes to the above-mentioned smooth and homogenous distribution of loads.

According to an embodiment, the first portion and the second portion of the first shear web and/or the second shear web are manufactured as separate parts. These separate parts are connected to form the first or second shear web. This allows to manufacture straight portions of the shear webs, which is comparatively easier than manufacturing a whole shear web with the two portions at once, e.g. with a kink.

Hereinafter, the wind turbine rotor blade will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

In the figures:
Fig. 1 shows a schematic view of a wind turbine.
Fig. 2 shows a schematic view of a rotor blade.
Fig. 3 shows a schematic view of a cross-section of the wind turbine rotor blade.
Fig. 4 shows a wind turbine rotor blade according to an embodiment of the invention.
Fig. 5-7 shows a wind turbine rotor blade according to a further embodiment of the invention.

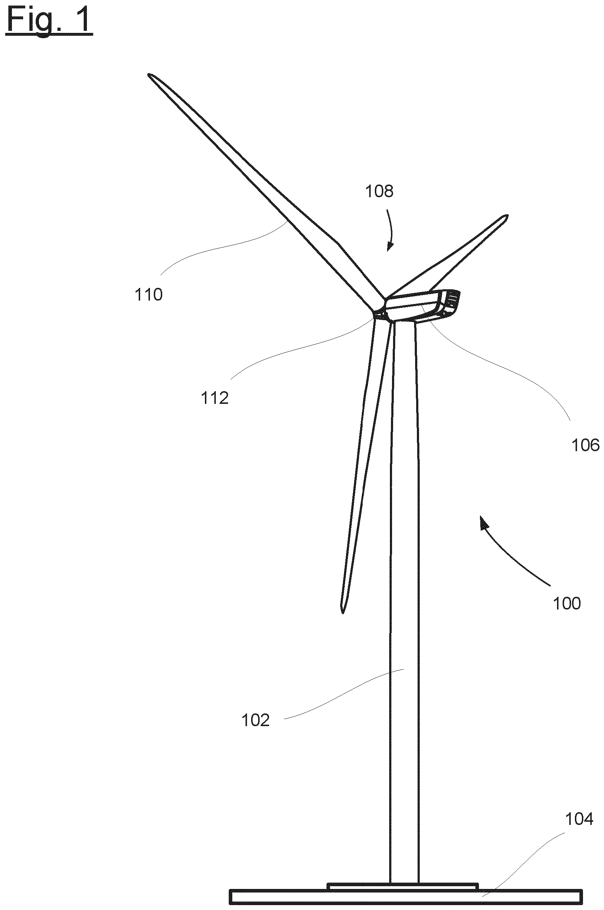

Fig. 1 shows a schematic view a wind turbine 100 which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

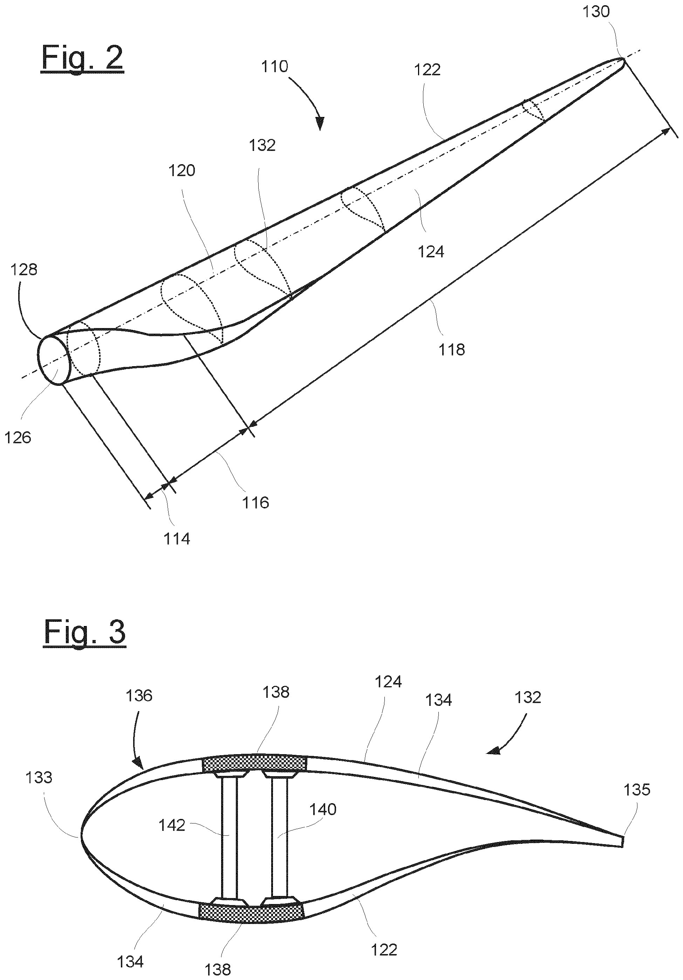

Fig. 2 shows an exemplary embodiment of a wind turbine rotor blade 110. The wind turbine rotor blade 110 has the shape of a conventional rotor blade and has a rotor blade root portion 114 facing the rotor hub 112. The rotor blade root portion 114 typically has an essentially circular cross-section. The rotor blade root portion 114 is followed by a transition portion 116 and profile portion 118. The wind turbine rotor blade 110 has a pressure side 122 and an opposite suction side 124 with respect to a spanwise direction 120 (also named main extension direction or longitudinal direction). The wind turbine rotor blade 110 is essentially hollow inside.

In the rotor blade root portion 114, a rotor blade root end 126 with a flange connection 128 is provided, by means of which the wind turbine rotor blade 110 can be mechanically connected to a pitch bearing or an extender.

The wind turbine rotor blade 110 has a rotor blade tip 130 and an opposite side of the rotor blade root end 126. The wind turbine rotor blade 110 can be a segmented rotor blade.

Fig. 3 shows a schematic cross section profile 132 (see Fig. 2) of an exemplary embodiment of the wind turbine rotor blade 110. The cross-sectional plane runs normal to the spanwise direction 120. The wind turbine rotor blade 110 comprises a (aerodynamic) shell 136, which is comprised by two half shells 134, wherein one half shell 134 corresponds to the pressure side 122 and the other one to the suction side 124. The two half shells 134 are firmly connected to each other along the spanwise direction 120 at opposite connection regions at the leading edge 133 and at the trailing edge 135, i.e. bonding flange lines. Each half shell 134 has a spar cap 138 embedded in the shell-structure. A spar cap 138 can also be generally named "main laminate" and carries main loads during operation of the wind turbine rotor blade 110. The wind turbine rotor blade 110 further comprises two shear webs 140, 142 connecting the spar caps 138.

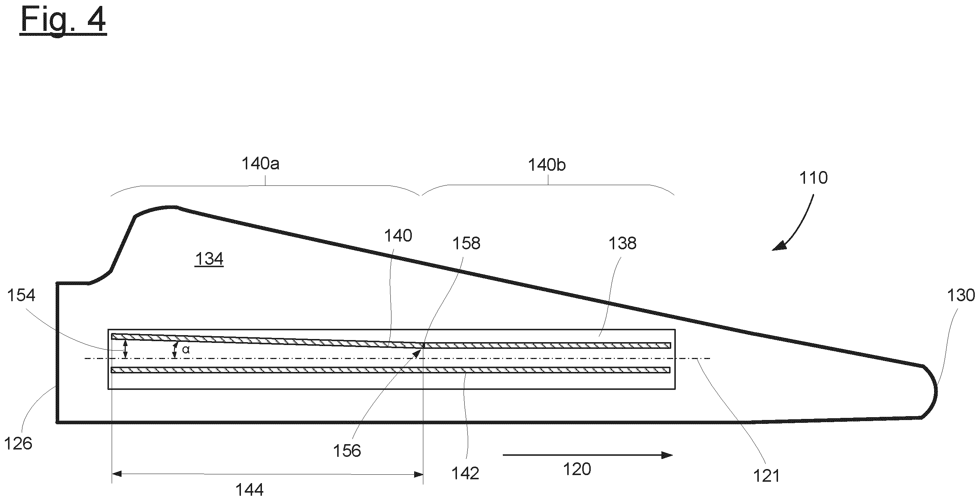

Fig. 4 shows a schematic top view of a half shell 134 of a wind turbine rotor blade 110 according to an embodiment of the invention. The wind turbine rotor blade 110 comprises a first shear web 140 and second shear web 142. The wind turbine rotor blade 110 comprises two half shells 134 (the second not shown), wherein each half shell 134 comprises a spar cap 138 (one of them indicated in Fig. 4). Both spar caps 138 are arranged opposite to each other and run along the spanwise direction 120. Each shear web 140, 142 connects the two spar caps 138. In other words, each shear web 140, 142 runs along or on the spar caps 138 and is not connected to the half shells 134 outside the spar caps 138.

Both shear webs 140, 142 are formed by a sandwich material comprising a core material panel and outer fiber reinforced laminate layers.

The spar cap 138 as indicated in Fig. 4 has a center line 121, i.e. a central axis.

The second shear web 142 is a conventional, straight shear web, which runs in parallel to the center line 121.

The first shear web 140 is comprised of a first portion 140a and a second portion 140b. The first portion 140a starts in the rotor blade root portion 114 (see Fig. 2). The first portion 140a is orientated at an angle α with respect to the center line 121. The angle α is, in the present example, 2°. The second portion 140b runs in parallel to the center line 121. The first and second portion 140a, 140b can also be seen as first and second planes, along which the first shear web 140 extends.

Due to this configuration, the first shear web 140 has a kink 156 at a transition point 158 from the first portion 140a to the second portion 140b. The transition point 158 is located in a distance from 35% of the entire rotor blade length starting from the rotor blade root end 126. This allows for a smooth transition from the first portion 140a to the second portion 140b. Knowing either the value of a maximum distance 154 between the first portion 140a and the center line 121, i.e. at the axial end of the first shear web 140 facing the rotor blade root end 126, or the value of the angle α, the length 144 from the end of the first shear web 140 to the kink 156 can be determined by trigonometry. In other words, the position where two extension planes of the first and second portion 140a, 140b cross each other, can be determined.

With the described embodiment a distance 154 between the first shear web 140 to the center line 121 linearly decreases along the first portion 140a, starting from or viewed from the rotor blade root end 126. Along the second portion 140b, the distance 154 remains constant.

The wind turbine rotor blade 110 according to Fig. 4 enables the functions and advantages as mentioned above.

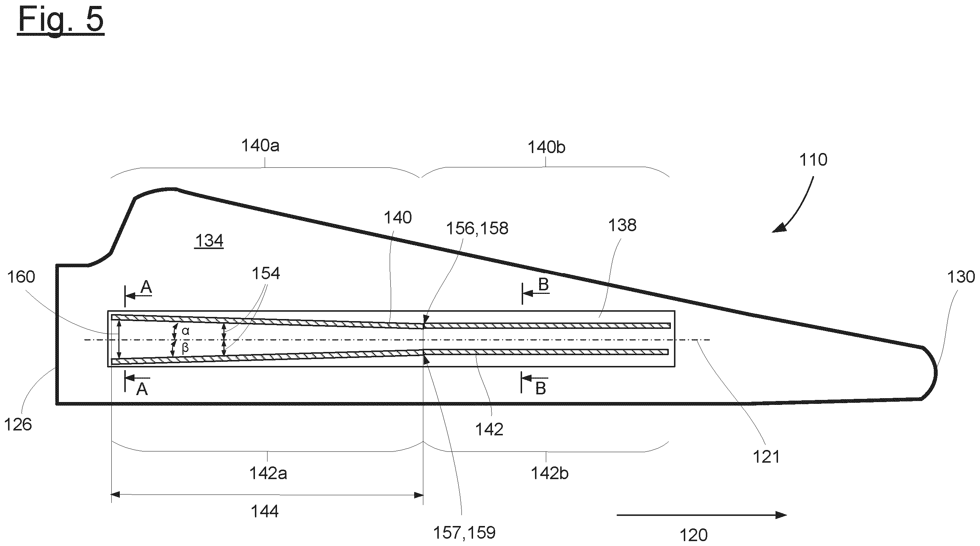

Fig. 5 to 7 refer to a wind turbine rotor blade 110 according to a further embodiment of the invention. The wind turbine rotor blade 110 according to Fig. 5 to 7 is equal to the above-described rotor blade of Fig. 4. Therefore, the above explanations analogously apply. Contrary to the above, the second shear web 142 is also comprised of two portions, a first portion 142a and a second portion 142b. Preferably, the second shear web 142 is mirror-symmetrical to the first shear web 140.

The first portion 142a of the second shear web 142 is orientated at an angle β to the center line 121. The angle β is, in the present example, 2°. The second portion 142b runs in parallel to the center line 121. The first and second portion 142a, 142b can also be seen as first and second planes, along which the second shear web 142 extends.

The second shear web 142 has a kink 157 at a transition point 159 from the first portion 142a to the second portion 142b. The kink 156 of the first shear web 140 is preferably at the same location in the spanwise direction 120 of the rotor blade 110 like the kink 157 of the second shear web 142. The angle β between the first portion 142a of the second shear web 142 and the center line 121 is less than 2°. The angle α and the angle β preferably have the same value.

Viewed from the rotor blade root end 126 - a distance 154 of the second shear web 142 to the center line 121 of the spar cap 138 decreases along the first portion 142a. In other words, starting from the rotor blade root end 126, the distance 160 between the two shear webs 140, 142 decreases along the first portion 140a of the first shear web 140 or the first portion 142a of the second shear web 142, respectively. Thus, starting from their axials ends facing the root end 126, both shear webs 140, 142 converge toward each other along their first portions 140a, 142a.

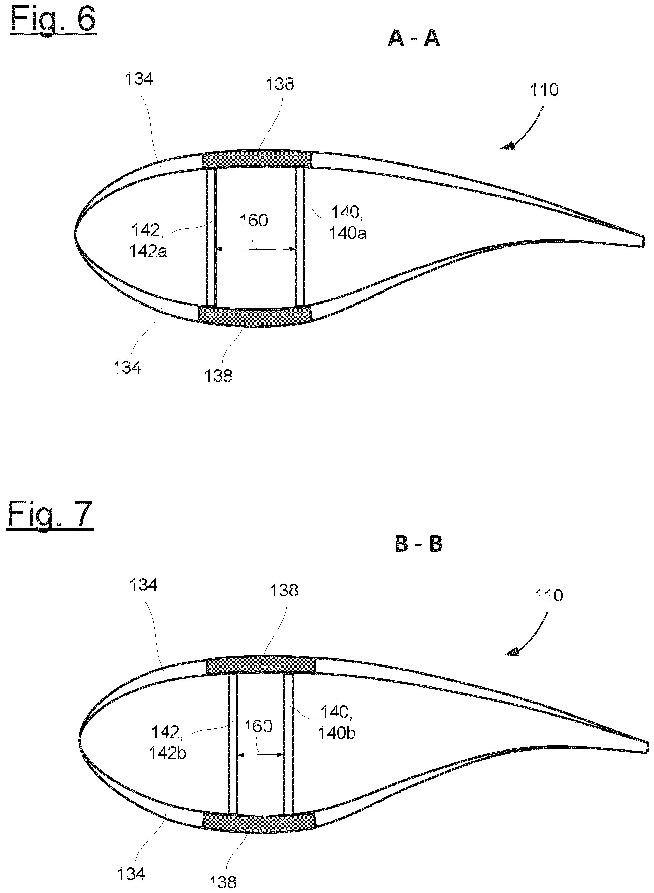

Fig. 6 and Fig. 7 show cross-sectional views of the wind turbine rotor blade 110 of Fig. 5 according to cross-sectional planes A-A and B-B. As can be seen in Fig. 6, the distance 160 between the two shear webs 140, 142 is way larger between the two first portions 140a, 142a compared to the distance 160 between the second portions 140b, 142b as shown in Fig. 7. The available space on the spar caps 138 is used to create as much space between the shear webs 140, 142 as possible. In the root end portion 114 of the wind turbine rotor blade 110 as shown in Fig. 6, a worker therefore has much space for any work on the shear webs, due to the specially designed, angled first portions 140a, 142b.

For both described embodiments of the invention, the first portions 140a, 142a and the second portions 140b, 142b of the first shear web 140 and/or the second shear web 142 are manufactured as separate parts, which are subsequently aligned and/or connected to each other to form the first and second shear web 140, 142.

### List of reference signs

- 100: wind turbine
- 102: tower
- 104: foundation
- 106: nacelle
- 108: rotor
- 110: wind turbine rotor blade
- 112: rotor hub
- 114: rotor blade root portion
- 116: transition portion
- 118: profile portion
- 120: spanwise direction
- 121: center line
- 122: pressure side
- 124: suction side
- 126: rotor blade root end
- 128: flange connection
- 130: rotor blade tip
- 132: cross section profile
- 133: leading edge
- 134: half shell
- 135: trailing edge
- 136: aerodynamic shell
- 138: spar cap
- 140: first shear web
- 140a: first portion
- 140b: second portion
- 142: second shear web
- 142a: first portion
- 142b: second portion
- α: angle
- β: angle
- 144: length
- 154: distance
- 156: kink
- 157: kink
- 158: transition point
- 159: transition point
- 160: further distance
- A-A: cross-sectional plane
- B-B: cross-sectional plane

## Claims

1. A wind turbine rotor blade (110) comprising a half shell (134) with a spar cap (138) and a first shear web (140), wherein
- the first shear web (140) is connected to the spar cap (138), which extends in a spanwise direction (120) of the wind turbine rotor blade (110) and has a center line (121),
- the first shear web (140) has a first portion (140a) starting in a rotor blade root portion (114), and a subsequent second portion (140b),
- the first portion (140a) is orientated at an angle (α) to the center line (121) such that - starting from the rotor blade root end (126) - a distance (154) of the first shear web (140) to the center line (121) of the spar cap (138) decreases along the first portion (140a).

2. The wind turbine rotor blade (110) of claim 1, wherein the first shear web (140) has a kink (156) at a transition point (158) from the first portion (140a) to the second portion (140b).

3. The wind turbine rotor blade (110) of claim 1 or 2, wherein the angle (α) between the first portion (140a) and the center line (121) is less than 2 degree.

4. The wind turbine rotor blade (110) of any of claims 1 to 3, wherein the transition point (158) is located in a distance from 15% to 40% of the rotor blade length starting from the rotor blade root end (126).

5. The wind turbine rotor blade (110) of any one of claims 1 to 4, wherein the distance (154) to the center line (121) of the second portion (140b) remains essentially constant along the second portion (140b).

6. The wind turbine rotor blade (110) of any one of claims 1 to 5, further comprising a second shear web (142), wherein
- the second shear web (142) is connected to the spar cap (138),
- the second shear web (142) is arranged at a distance (160) to the first shear web (140),
- starting from the rotor blade root end (126), the distance (160) between the two shear webs (140, 142) decreases along the first portion (140a) of the first shear web (140).

7. The wind turbine rotor blade (110) of claim 6, wherein
- the second shear web (142) has a first portion (142a) starting in the rotor blade root portion (114), and a subsequent second portion (142b),
- the first portion (142a) is orientated at an angle (β) to the center line (121) such that - starting from the rotor blade root end (126) - a distance (154) of the second shear web (142) to the center line (121) of the spar cap (138) decreases along the first portion (142a), wherein
- the first shear web (140) and the second shear web (142) converge toward each other along their first portions (140a, 142a) .

8. The wind turbine rotor blade (110) of claim 7, wherein the second shear web (142) has a kink (157) at a transition point (159) from the first portion (142a) to the second portion (142b).

9. The wind turbine rotor blade (110) of claim 8, wherein the kink (156) of the first shear web (140) is at the same location in a spanwise direction (120) of the rotor blade (110) as the kink (157) of the second shear web (142).

10. The wind turbine rotor blade (110) of any one of claims 7 to 9, wherein the angle (β) between the first portion (142a) and the center line (121) is less than 2 degree.

11. The wind turbine rotor blade (110) of any one of claims 7 to 10, wherein the angle (α) and the angle (β) have the same value.

12. The wind turbine rotor blade (110) of any one of claims 7 to 11, wherein the first portion (140a, 142a) and the second portion (140b, 142b) of the first shear web (140) and/or the second shear web (142) are manufactured as separate parts.
